(19) Europäisches Patentamt
European Patent Office
Office européen des brevets

(11) **EP 4 414 826 A1**

(12) **EUROPÄISCHE PATENTANMELDUNG**

(43) Veröffentlichungstag:
**14.08.2024 Patentblatt 2024/33**

(21) Anmeldenummer: **23155539.2**

(22) Anmeldetag: **08.02.2023**

(51) Internationale Patentklassifikation (IPC):
***G06F 3/147*** *(2006.01)*

(52) Gemeinsame Patentklassifikation (CPC):
**G06F 3/147; B61L 19/06; B61L 25/08; B61L 27/20;
G06F 11/0796;** B61L 2019/065; G09G 2330/12;
G09G 2358/00; G09G 2370/10

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(71) Anmelder: **PJ Monitoring GmbH
8020 Graz (AT)**

(72) Erfinder:
• **Ferenczi, David Tamas
8045 Graz (AT)**

• **Hribernig, Luca
8046 Graz (AT)**
• **Petschnig, Günter
8042 Graz (AT)**
• **Joch, Martin
8045 Graz (AT)**

(74) Vertreter: **Schwarz & Partner Patentanwälte
GmbH
Patentanwälte
Wipplingerstraße 30
1010 Wien (AT)**

(54) **VERFAHREN UND SYSTEM ZUR VISUALISIERUNG VON SICHERHEITSRELEVANTEN
GRAFISCHEN UND TEXTUELLEN DATEN IM EISENBAHNWESEN**

(57)     Das Verfahren zur Visualisierung von grafischen und textuellen Informationen in einer nicht sicherheitsrelevanten Hardware- und Softwareumgebung im Eisenbahnwesen, wobei die Visualisierung der grafischen und textuellen Informationen ihre Darstellung an einem Bildschirm als visuelle Elemente, die durch zumindest eines aus ihrer Form, ihrer Größe, ihrer Farbgestaltung, ihrer horizontalen und vertikalen Position am Bildschirm, definiert sind, umfasst, ist dadurch gekennzeichnet, dass die visuellen Elemente durch Kombinieren von zumindest zwei Bestandteilen der visuellen Elemente am Bildschirm dargestellt werden, wobei durch das Kombinieren ein möglicher Fehler in der nicht sicherheitsrelevanten Hardware- und Software-Umgebung als Darstellungsfehler von zumindest einem der visuellen Elemente am Bildschirm offenbart wird.

Fig. 2

**Beschreibung**

Die vorliegende Erfindung betrifft die Visualisierung von sicherheitsrelevanten grafischen und textuellen Daten bzw. Informationen in einer nicht sicherheitsrelevanten, komplexen Hardware- und Softwareumgebung im Eisenbahnwesen. Diese Daten sind in der Darstellung durch ihre Form (Symbole und/oder Textinhalt), ihre Größe, ihre Farbgestaltung und ihre Position am Bildschirm definiert.

Die grundlegende Aufgabe der vorliegenden Erfindung ist es, sicherzustellen, dass die grafischen und textuellen Daten/Informationen entweder korrekt dargestellt werden oder, falls Fehler auftreten, die in einer nicht sicherheitsrelevanten Hardware- und Softwareumgebung mit sehr hoher Wahrscheinlichkeit nicht detektiert werden, diese Fehler zu einer veränderten Darstellung der grafischen und textuellen Daten führen, die für einen Anwender der Visualisierung sofort und eindeutig als fehlerhaft erkennbar ist.

Bisher wurden zur Visualisierung von sicherheitsrelevanten grafischen und textuellen Daten entweder sicherheitsrelevante Hardware- und Softwarekomponenten verwendet, z.B. spezielle Stellwerksrechner, oder Visualisierungseinheiten redundant, das heißt in mehrfacher Zahl vorgesehen. Beide Lösungen sind teuer, wartungs- und platzintensiv und komplex in der Anwendung.

Das Dokument EP 3 040 862 offenbart ein Verfahren zur sicheren Visualisierung von sicherheitsrelevanten Daten, wobei das Verfahren die folgenden Schritte umfasst: Zerlegen einer sicheren Visualisierung des mindestens einen variablen Eingangsparameters in seine sicheren Basiselemente für alle seine möglichen Zustände; für jedes der zerlegten sicheren Basiselemente Aufzählen und Speichern eines Satzes aller möglichen Zustände der sicheren Basiselement-Visualisierung; für jedes der zerlegten sicheren Basiselemente Übertragen des Satzes aller möglichen Zustände der sicheren Basiselement-Visualisierung an ein Zielsystem, das zur Laufzeit eine sichere Visualisierung bereitstellt; für jeden der mindestens einen variablen Eingangsparameter Eingeben eines Ist-Zustands des mindestens einen variablen Eingangsparameters in das Zielsystem und für jeden des mindestens einen variablen Eingangsparameters Bestimmen der sicheren Basiselement-Visualisierung entsprechend dem tatsächlichen Zustand des mindestens einen variablen Eingangsparameters und seines korrekten Zustands aus der Menge von möglichen Zuständen der sicheren Basiselement-Visualisierung; sukzessives Wiedergeben und Übereinanderlegen jeder der entsprechenden sicheren Basiselement-Visualisierungen auf einem Anzeigemittel des Zielsystems, wodurch eine sichere Visualisierung des Ist-Zustands des mindestens einen variablen Eingangsparameters erzeugt wird.

Die Darstellungskombinationen greifen beim EP 3 040 862 auf für sich sichere Basiselemente zu, die auf einem sicherheitsrelevanten Rechner erstellt werden. Weiters setzt das EP 3 040 862 voraus, dass alle möglichen Zustände der sicheren Basiselement-Visualisierung an ein Zielsystem, das zur Laufzeit eine sichere Visualisierung bereitstellt, übertragen werden. Das Verfahren gemäß dem EP 3 040 862 funktioniert daher nicht, wenn die Visualisierung von Information auf einem Zielsystem stattfindet, das keine sichere Visualisierung bereitstellt.

Es ist daher die Aufgabe der vorliegenden Erfindung, die Visualisierung von sicherheitsrelevanten grafischen und textuellen Daten an einem Bildschirm in einer nicht sicherheitsrelevanten, komplexen Hardware- und Softwareumgebung im Eisenbahnwesen so zu gestalten, dass bei Auftreten von Fehlern in der Visualisierung, die durch die verwendete, nicht sicherheitsrelevante Hardware und Software bedingt sind, diese Fehler als für den Anwender eindeutig erkennbare Darstellungsfehler in der Visualisierung angezeigt werden.

Die Erfindung löst diese Aufgabe durch Bereitstellung eines Verfahrens nach Anspruch 1 und eines Systems nach Anspruch 16. Vorteilhafte Ausführungsformen der Erfindung sind in den Unteransprüchen, der Beschreibung und den Zeichnungen dargelegt.

Das erfindungsgemäße Verfahren zur Visualisierung von sicherheitsrelevanten grafischen und textuellen Informationen in einer nicht sicherheitsrelevanten Hardware- und Softwareumgebung im Eisenbahnwesen, wobei die Visualisierung der grafischen und textuellen Informationen ihre Darstellung an einem Bildschirm als visuelle Elemente, die durch zumindest eines aus ihrer Form, ihrer Größe, ihrer Farbgestaltung, ihrer horizontalen und vertikalen Position am Bildschirm, definiert sind, umfasst, zeichnet sich dadurch aus, dass die visuellen Elemente durch Kombinieren von zumindest zwei Bestandteilen der visuellen Elemente am Bildschirm dargestellt werden, wobei durch das Kombinieren ein möglicher Fehler in der nicht sicherheitsrelevanten Hardware- und Software-Umgebung als Darstellungsfehler von zumindest einem der visuellen Elemente am Bildschirm offenbart wird.

Durch das erfindungsgemäße Verfahren ist sichergestellt, dass jegliche Hardware- und Softwarefehler von der Speicherung und Verarbeitung der Daten bis zur Darstellung der Daten am nicht sicherheitsrelevanten Rechner vom Anwender leicht visuell erkennbar sind, obwohl sowohl der Rechner als auch die auf diesem Rechner laufende Softwareumgebung (bis auf bestimmte Funktionen der Softwareapplikation) nicht sicherheitsrelevant ausgeführt sind, d.h. es sich dabei um Standardhardware und -software handelt. Der Begriff "sicherheitsrelevant" oder "sicherheitsbezogen", auch als "funktional sicher" bedeutet, dass das System in der Lage ist Sicherheitsfunktionen mit der geforderten Sicherheitsintegrität auszuführen. Für die exakte Begriffsdefinitionen siehe Standard EN 61508-4:2010.

Die der Erfindung zugrundeliegende Idee ist, alle relevanten funktionalen Einheiten des nicht sicherheitsrelevanten Rechners, der die Daten empfängt und bis zur Darstellung verarbeitet, insbesondere Speicher, Arithmetikeinheit, bildgebende Einheiten, und die relevanten Betriebssystemfunktionen und Software-Bibliotheken in den Prozess zur Darstellung der Daten einzubinden. Im Falle eines Fehlers (z.B. Speicherfehler, Arithmetik-Befehlsfehler, Kommunikationsbus-Fehler oder Fehler in einer Software-Bibliothek, usw.) wird die Darstellung offensichtlich falsch und entspricht nicht der Erwartungshaltung des Anwenders. Somit kann ein geschulter Anwender den Fehler sofort erkennen und die entsprechenden Maßnahmen einleiten.

Die nicht sicherheitsrelevante Hardware- und Softwareumgebung im Eisenbahnwesen kann viele unterschiedliche, unbestimmte bzw. unbekannte Hardware- und Softwareelemente umfassen, die zusammen als eine Mensch-Maschine-Schnittstelle zur Visualisierung der grafischen und textuellen Informationen angesehen werden können, die aber in Bezug auf ihr mögliches Fehlerverhalten, einzeln und in Kombination miteinander, als nicht deterministisch angesehen werden müssen, und somit eine "Blackbox" darstellen, deren Fehlerverhalten nicht hinreichend bekannt ist.

Als beispielhafte Eigenschaften der visuellen Elemente sind ihre Farbkanäle und ihre Transparenz zu nennen. Das Kombinieren der visuellen Elemente umfasst das Kombinieren der Eigenschaften ihrer Bildpunkte, beispielsweise das Kombinieren von Farbkanälen, oder das Kombinieren von Farbkanälen und Transparenz. Das Wesen der Erfindung liegt darin, die Kombination der Eigenschaften der Bildpunkte der visuellen Elemente so zu gestalten, dass bei Auftreten irgendeines Fehlers in der nicht sicherheitsrelevanten Hardware- und Softwareumgebung die Darstellung der grafischen und textuellen Informationen für den menschlichen Betrachter so verändert wird, dass sie sich von dem unterscheidet, was er zum Betrachtungszeitpunkt in optischer Hinsicht erwartet.

Bevorzugt werden die visuellen Elemente durch mehr als eines aus ihrer Form, ihrer Größe, ihrer Farbgestaltung, ihrer horizontalen und vertikalen Position am Bildschirm, definiert, weil mit zunehmender Anzahl an Definitionen fehlerhafte Darstellungen für den Benutzer leichter erkennbar sind und somit die Usability des Verfahrens steigt.

In einer bevorzugten Ausführungsform des erfindungsgemäßen Verfahrens enthält die nicht sicherheitsrelevante Hardware- und Softwareumgebung einen nicht sicherheitsrelevanten Rechner mit zumindest einer darauf laufenden Softwareapplikation, die folgende Verfahrensschritte ausführt:

das Durchführen einer Sicherheitsintegritätsprüfung von sicherheitsrelevanten Daten, die von zumindest einem sicherheitsrelevanten Rechner bereitgestellt werden und die grafischen und textuellen Informationen in zumindest zwei unterschiedlichen Kodierungen redundant enthalten,

das Umwandeln der grafischen und textuellen Informationen aus der ersten Kodierung in erste Visualisierungsinformation,

das Umwandeln der grafischen und textuellen Informationen aus der zweiten Kodierung in zweite Visualisierungsinformation,

gegebenenfalls das Umwandeln der grafischen und textuellen Informationen aus den weiteren Kodierungen in weitere Visualisierungsinformationen,

das Kombinieren der ersten, der zweiten und gegebenenfalls der weiteren Visualisierungsinformationen zu einer kombinierten Visualisierungsinformation und das Darstellen der kombinierten Visualisierungsinformation am Bildschirm,

wobei nur fehlerfrei erfolgtes Umwandeln der grafischen und textuellen Informationen aus den jeweiligen Kodierungen in die Visualisierungsinformationen und fehlerfreies Kombinieren der Visualisierungsinformationen zur kombinierten Visualisierungsinformation eine Darstellung ergibt, die von einem Anwender als korrekt erkennbar ist, und andernfalls die kombinierte Visualisierungsinformation eine Darstellung ergibt, aus der der Anwender erkennt, dass ein Fehler aufgetreten ist.

Die sicherheitsrelevanten Daten können in einer Ausführungsform von zumindest zwei unterschiedlichen sicherheitsrelevanten Rechnern bereitgestellt werden, wobei die nicht sicherheitsrelevante Softwareapplikation die Verfahrensschritte für alle bereitgestellten sicherheitsrelevanten Daten so ausführt, dass alle grafischen und textuellen Informationen auf demselben Bildschirm dargestellt werden.

In einer weiteren Ausführungsform des erfindungsgemäßen Verfahrens werden die sicherheitsrelevanten Daten von dem zumindest einen sicherheitsrelevanten Rechner für ihre Bereitstellung in ein Datentelegramm verpackt, in dem die erste Kodierung, die zweite Kodierung und gegebenenfalls die weiteren Kodierungen der grafischen und textuellen Informationen eingebettet werden und das Datentelegramm, vorzugsweise über einen nicht sicherheitsrelevanten Kommunikationskanal, an den nicht sicherheitsrelevanten Rechner übertragen wird. Die redundanten Kodierungen unterstützen eine mehrkanalige Bearbeitung (Umwandlung in Visualisierungsinformation) in der nicht sicherheitsrelevanten Softwareapplikation. Es sei angemerkt, dass die Softwareapplikation grundsätzlich nicht sicherheitsrelevant ist, aber punktuell sicherheitsrelevante Funktionen ausführt, die grundsätzlich durch die spezielle Datenvorbereitung von sicherheitsrelevanten Rechnern unterstützt wird.

Bevorzugt enthält die zweite Kodierung eine zur ersten Kodierung invertierte Repräsentation der grafischen und textuellen Informationen. Weitere Kodierungen sind je nach Anwendungsfall möglich. Die invertierte Datenablage bzw. Kodierung unterstützt eine mehrkanalige Bearbeitung (Umwandlung in Visualisierungsinformation) in der nicht sicherheitsrelevanten Softwareapplikation.

In einer bevorzugten Ausgestaltung des erfindungsgemäßen Verfahrens weisen die Repräsentationen der grafischen und textuellen Informationen in der ersten Kodierung und der zweiten Kodierung oder gegebenenfalls in den weiteren Kodierungen eine Hamming Distanz von zumindest vier auf. Die geeignete Hamming-Distanz der Kodierungen unterstützt eine Verwendung von Umsatztabellen (Look-up Table) mit sehr hoher Fehleraufdeckung bei der Umwandlung in Visualisierungsinformation in der nicht sicherheitsrelevanten Softwareapplikation.

Weiters ist es gemäß der Erfindung bevorzugt, dass das Verpacken der sicherheitsrelevanten Daten in das Datentelegramm das Ermitteln einer ersten Prüfsumme der ersten Kodierung, das Ermitteln einer zweiten Prüfsumme der zweiten Kodierung, gegebenenfalls das Ermitteln von weiteren Prüfsummen der weiteren Kodierungen und das Einbetten der ersten und der zweiten und gegebenenfalls der weiteren Prüfsummen in das Datentelegramm umfasst, und das Überprüfen auf Sicherheitsintegrität des von dem nicht sicherheitsrelevanten Rechner empfangenen Datentelegramms das Überprüfen der ersten Kodierung anhand der ersten Prüfsumme und das Überprüfen der zweiten Kodierung anhand der zweiten Prüfsumme und gegebenenfalls das Überprüfen der weiteren Kodierungen anhand der weiteren Prüfsummen umfasst. Die separaten Prüfsummen der Kodierungen unterstützen, dass die Kodierungen während der Umwandlung in Visualisierungsinformation in der nicht sicherheitsrelevanten Softwareapplikation bei jedem Lesezugriff auf Sicherheitsintegrität überprüft werden.

Es kann weiters vorgesehen werden, dass eine Identifikation des sicherheitsrelevanten Rechners in den Prüfsummen der Kodierungen abgebildet wird. Somit wird die Überprüfung der Sicherheitsintegrität während der Umwandlung in Visualisierungsinformation in der nicht sicherheitsrelevanten Softwareapplikation als auch die Zuordnung der Datenquelle, d.h. des sicherheitsrelevanten Rechners gewährleistet.

Eine weitere Ausführungsform des erfindungsgemäßen Verfahrens ist dadurch gekennzeichnet, dass die Softwareapplikation das empfangene Datentelegramms auf Sicherheitsintegrität überprüft, und falls das Datentelegramm korrekt ist, das Datentelegramm zur weiteren Verwendung freigibt, umfassend

das Auslesen der Daten der ersten Kodierung des freigegebenen Datentelegramms inklusive der dazugehörigen ersten Prüfsumme,

das Umwandeln der ausgelesenen Daten der ersten Kodierung in die erste Visualisierungsinformation in einem ersten Bearbeitungskanal anhand von Umsetzungstabellen, wobei auf die erste Kodierung immer nur lesend zugegriffen wird und bei jedem Lesezugriff die Sicherheitsintegrität der ersten Kodierung anhand der ersten Prüfsumme überprüft wird,

wobei die das Ergebnis der ersten Visualisierungsinformation für einen Anwender entweder nicht sichtbar oder als fehlerhafte Darstellung erkennbar ist,

das Auslesen der Daten der zweiten Kodierung des freigegebenen Datentelegramms inklusive der dazugehörigen zweiten Prüfsumme,

das Umwandeln der ausgelesenen Daten der zweiten Kodierung in die zweite Visualisierungsinformation in einem zweiten Bearbeitungskanal anhand von Umsetzungstabellen, wobei auf die zweite Kodierung immer nur lesend zugegriffen wird und bei jedem Lesezugriff die Sicherheitsintegrität der zweiten Kodierung anhand der zweiten Prüfsumme überprüft wird,

wobei das Ergebnis der zweiten Visualisierungsinformation für einen Anwender entweder nicht sichtbar oder als fehlerhafte Darstellung erkennbar ist,

gegebenenfalls das Auslesen der Daten weiterer Kodierungen des freigegebenen Datentelegramms inklusive der dazugehörigen Prüfsummen und Umwandeln der ausgelesenen Daten der weiteren Kodierungen in weitere Visualisierungsinformationen in weiteren Bearbeitungskanälen anhand von Umsetzungstabellen, wobei auf die weiteren Kodierungen immer nur lesend zugegriffen wird und bei jedem Lesezugriff die Sicherheitsintegrität der weiteren Kodierungen anhand der zugehörigen Prüfsumme überprüft wird, wobei das Ergebnis der weiteren Visualisierungsinformationen für einen Anwender entweder nicht sichtbar ist oder als fehlerhafte Darstellung erkennbar ist,

das Kombinieren der ersten Visualisierungsinformation und der zweiten Visualisierungsinformation und gegebenenfalls der weiteren Visualisierungsinformationen zu einer kombinierten Visualisierungsinformation, wobei die kombinierte Visualisierungsinformation, falls bei den durchgeführten Verfahrensschritten kein Fehler aufgetreten ist, solcherart am Bildschirm dargestellt wird, dass der Anwender aus der Darstellung die Korrektheit der Visualisierung der Daten erkennt.

In einer weiteren Ausführungsform der Erfindung umfasst das Verfahren zur Visualisierung von grafischen Informationen das Umwandeln der ausgelesenen ersten Kodierung in erste Visualisierungsinformation das Erstellen eines ersten Teilbilds, das Umwandeln der ausgelesenen zweiten Kodierung in zweite Visualisierungsinformation das Erstellen eines zweiten Teilbilds, und gegebenenfalls das Umwandeln der ausgelesenen weiteren Kodierungen in weitere Visualisierungsinformationen das Erstellen weiterer Teilbilder, wobei das Kombinieren der ersten Visualisierungsinformation und der zweiten Visualisierungsinformation und gegebenenfalls der weiteren Visualisierungsinformationen zu einer kombinierten Visualisierungsinformation das Überlagern des ersten Teilbilds und des zweiten Teilbilds und gegebenenfalls der weiteren Teilbilder am Bildschirm umfasst. Eine Fortbildung dieser Ausführungsform der Erfindung ist dadurch gekennzeichnet, dass das Erstellen der Teilbilder das Aufsuchen eines Werteeintrags in einer Umsetzungstabelle anhand der ausgelesenen Daten in der zugehörigen Kodierung umfasst, wobei jeder Werteeintrag der Umsetzungstabelle ein grafisches Teilsymbol, die relative Bildschirmposition des Teilbilds und so viele Farbwerte für die Kombination der Hintergrundfarben aller Teilsymbole umfasst, wie Teilsymbole für die Erstellung der kombinierten Visualisierungsinformation herangezogen werden. Nur bei fehlerfreier Kombination aller Teilbilder entspricht die Form (Symbol), die Größe, die Farbgestaltung (die Hintergrundfarbe wird aus den verschiedenen Hintergrundfarbenarben aller Teilbilder kombiniert) und die horizontale und vertikale Position am Bildschirm der dargestellten grafischen Daten der Erwartungshaltung des Benutzers, andernfalls ist die Darstellung offensichtlich falsch.

Eine weitere Ausführungsform des erfindungsgemäßen Verfahrens zur Visualisierung von textuellen Daten ist dadurch gekennzeichnet, dass das Umwandeln der ausgelesenen ersten Kodierung in erste Visualisierungsinformation das Erstellen eines ersten Felds umfasst, das Umwandeln der ausgelesenen zweiten Kodierung in zweite Visualisierungsinformation das Erstellen eines zweiten Felds umfasst, und gegebenenfalls das Umwandeln der ausgelesenen weiteren Kodierungen in weitere Visualisierungsinformationen das Erstellen weiterer Felder umfasst, wobei das Kombinieren der ersten Visualisierungsinformation und der zweiten Visualisierungsinformation und gegebenenfalls der weiteren Visualisierungsinformationen zu einer kombinierten Visualisierungsinformation das Überlagern des ersten Felds und des zweiten Felds und gegebenenfalls der weiteren Felder am Bildschirm umfasst. Bei einer Fortbildung dieser Ausführungsform umfasst das Erstellen eines Felds das Aufsuchen eines Werteeintrags in einer Umsetzungstabelle anhand der ausgelesenen Daten in der zugehörigen Kodierung, wobei jeder Werteeintrag der Umsetzungstabelle einen Text, die relative Bildschirmposition des Felds, eine Hintergrundfarbe und so viele Transparenzwerte für die Kombination mit der Hintergrundfarbe aller erstellten Felder umfasst, wie Felder für die Erstellung der kombinierten Visualisierungsinformation herangezogen werden. Nur bei fehlerfreier Kombination aller Felder entspricht die Form (Textinhalt), die Größe, die Farbgestaltung (die Durchsichtigkeit bzw. Transparenz der Hintergrundfarbe von Feldern wird aus den verschiedenen Transparenzwerten aller Felder kombiniert und bei korrekter Kombination für den Anwender unsichtbar bzw. durchsichtig) und die horizontale und vertikale Position am Bildschirm der dargestellten textuellen Daten der Erwartungshaltung des Anwenders, andernfalls ist die Darstellung offensichtlich falsch.

Bevorzugt weist der nicht sicherheitsrelevante Rechner einen Taktgeber auf, der vorzugsweise durch eine externe Zeitquelle abgesichert wird, um eine sichere zeitliche Gültigkeit der am Bildschirm dargestellten Information zu überwachen und gewährleisten.

Wenn ein sich ständig änderndes Symbol, beispielsweise ein Drehrad, etc., am Bildschirm dargestellt wird, kann der Anwender dadurch das "Einfrieren" der Bildschirmdarstellung und somit die Ungültigkeit der dargestellten Informationen erkennen.

Die Erfindung löst die gestellte Aufgabe auch durch Bereitstellen eines Systems zur Visualisierung von sicherheitsrelevanten grafischen und textuellen Informationen in einer nicht sicherheitsrelevanten Hardware- und Softwareumgebung im Eisenbahnwesen, wobei das System einen nicht sicherheitsrelevanten Rechner mit zumindest einem Bildschirm, einen oder mehrere sicherheitsrelevante Rechner und einen Kommunikationskanal zwischen dem nicht sicherheitsrelevanten Rechner und dem zumindest einen sicherheitsrelevanten Rechner umfasst, wobei der nicht sicherheitsrelevante Rechner und der sicherheitsrelevante Rechner mit Prozessoren, Programmspeichern und Datenspeichern ausgestattet und dazu ausgebildet sind, das erfindungsgemäße Verfahren abzuarbeiten, wobei vorzugsweise der nicht sicherheitsrelevante Rechner als Tablet-Computer ausgebildet ist. Die nicht sicherheitsrelevante Softwareumgebung des nicht sicherheitsrelevanten Rechners kann ein Betriebssystem des Rechners und Softwarebibliotheken umfassen.

Die Erfindung wird nachfolgend anhand von Ausführungsbeispielen unter Bezugnahme auf die Zeichnungen näher erläutert. In den Zeichnungen zeigen:

Fig. 1 eine schematische Übersicht der in der Erfindung verwendeten Hardware- und Softwarestruktur;
Fig. 2 ein Flussdiagramm des prinzipiellen Ablaufs des erfindungsgemäßen Verfahrens inklusive eine bevorzugte Datenablagestruktur (bzw. Datentelegrammstruktur).

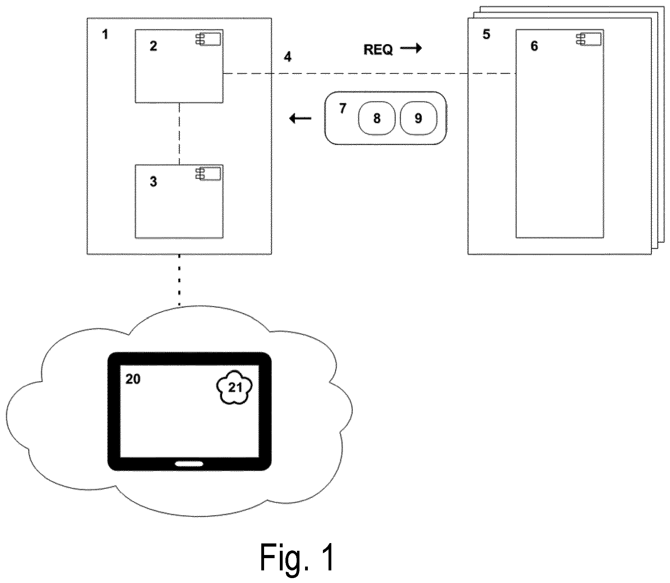

Fig. 1 zeigt eine schematische Übersicht der in der Erfindung verwendeten Hardware- und Softwarestruktur. Diese Struktur umfasst einen nicht sicherheitsrelevanten Rechner 1, auf dem eine Software-Applikation 2 mit Visualisierungsfunktion sowie eine nicht sicherheitsrelevante Softwareumgebung 3 (Betriebssystem und Software-Bibliotheken) installiert sind, wobei die Software-Applikation 2 in der Softwareumgebung 3 läuft. Eine Anzeige der visualisierten Daten erfolgt an einem mit dem nicht sicherheitsrelevanten Rechner 1 integrierten Bildschirm 20. Der nicht sicherheitsrelevante Rechner 1 kann beispielsweise als Tablet-Computer, Laptop oder Smartphone ausgebildet sein. Die zu visualisierenden sicherheitsrelevanten Daten sind in mindestens einem sicherheitsrelevanten Rechner 5 verfügbar, auf dem eine sicherheitsrelevante Software 6 läuft. Die sicherheitsrelevante Software 6 bereitet die Daten zur Übertragung an den nicht sicherheitsrelevanten Rechner 1 über einen nicht sicherheitsrelevanten Kommunikationskanal 4 zwischen dem sicherheitsrelevanten Rechner 5 und dem nicht sicherheitsrelevanten Rechner 1 auf und auf Aufforderung (REQ) der Software-Applikation 2 setzt die Datenübertragung in Gang.

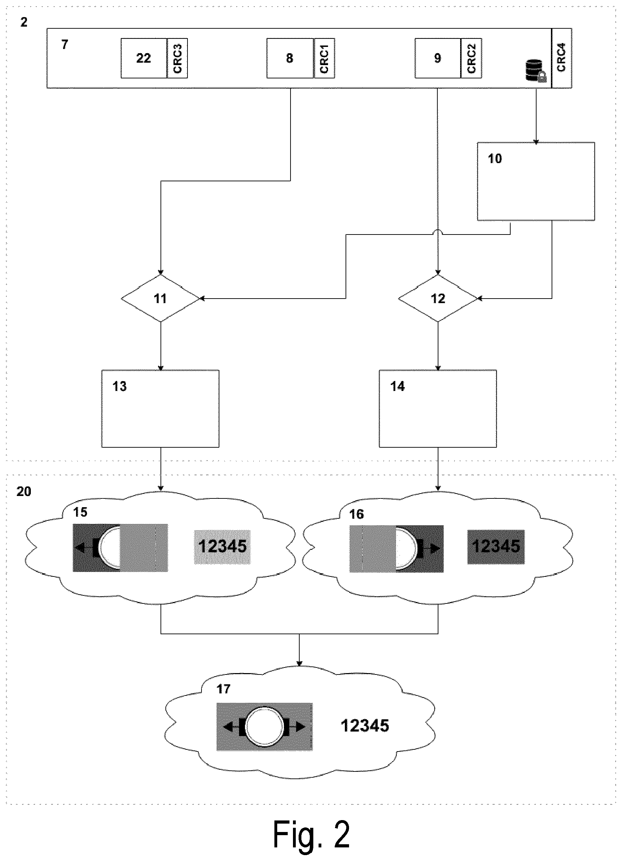

Fig. 2 zeigt ein Flussdiagramm des prinzipiellen Ablaufs des erfindungsgemäßen Verfahrens zur Visualisierung von sicherheitsrelevanten grafischen und textuellen Daten in der Software-Applikation 2. Die Aufbereitung dieser Daten erfolgt durch die sicherheitsrelevante Software 6 in dem mindestens einen sicherheitsrelevanten Rechner 5, die die Daten in ein weiter unten näher beschriebenes Datentelegramm 7 verpackt, das über den Kommunikationskanal 4 an den nicht sicherheitsrelevanten Rechner 1 übertragen und von diesem empfangen wird. Bei der Erstellung des Datentelegramms 7 werden die Daten in eine erste Kodierung 8 und eine zweite Kodierung 9 umgewandelt und beide Kodierungen 8, 9 in das Datentelegramm 7 eingebettet. Die erste Kodierung 8 und die zweite Kodierung 9 unterscheiden sich voneinander, beinhalten aber beide dieselben sicherheitsrelevanten Daten und stellen somit redundante Aufbereitungen der sicherheitsrelevanten grafischen und textuellen Daten dar.

Die Aufbereitung und Übertragung der Daten werden vom Flussdiagramm nicht dargestellt, da diese nicht unmittelbarer Teil des erfindungsgemäßen Verfahrens zur Visualisierung sind.

Das Datentelegramm 7 wird nach seinem Empfang in einem Telegrammparser 10, der den Kommunikationskanal 4 absichert, auf Sicherheitsintegrität geprüft. Der Telegrammparser 10 lässt nur dann eine Verwendung der im Datentelegramm 7 enthaltenen Kodierungen 8, 9 zu, wenn die Überprüfung ergeben hat, dass ein korrektes Datentelegramm 7 empfangen worden ist. Dies ist in Fig. 2 anhand eines ersten und eines zweiten Entscheidungsknotens 11, 12 dargestellt, die vom Telegrammparser 10 freigeschaltet (oder im Fall eines fehlerhaften Datentelegramms 7 gesperrt) werden.

Sind der erste und der zweite Entscheidungsknoten 11, 12 freigeschaltet, so liest ein erster Algorithmus 13 die in der ersten Kodierung 8 enthaltenen Daten aus und wandelt sie in erste Visualisierungsinformation 15 um, und ein zweiter Algorithmus 14 liest die in der zweiten Kodierung 9 enthaltenen Daten aus und wandelt sie in zweite Visualisierungsinformation 16 um. Da die in der ersten und der zweiten Kodierung 8, 9 enthaltenen Daten inhaltsgleich sind, stellen die erste Visualisierungsinformation 15 und die zweite Visualisierungsinformation 16 unterschiedliche visuelle Informationen derselben Daten dar. Sowohl die erste Visualisierungsinformation 15 als auch die zweite Visualisierungsinformation 16 wären bei direkter Darstellung am Bildschirm 20 für einen Anwender entweder nicht sichtbar oder als fehlerhafte Darstellung erkennbar. Die Erfindung sieht in einem weiteren Schritt vor, die erste und die zweite Visualisierungsinformation 15, 16 zu einer kombinierten Visualisierungsinformation 17 zu kombinieren und diese kombinierte Visualisierungsinformation 17 am Bildschirm 20 darzustellen. Nur wenn alle Bearbeitungsschritte der Daten bis zur Erstellung der kombinierten Visualisierungsinformation 17 korrekt durchlaufen worden sind, kann die Darstellung am Bildschirm 20 der Erwartungshaltung des Anwenders an eine korrekte Visualisierung der Daten entsprechen. In allen anderen Fällen erkennt der Anwender an der fehlerhaften Darstellung, dass die erfolgte Visualisierung der Daten nicht korrekt ist und er entsprechende, in seinem Arbeitsablauf vorgeschriebene Maßnahmen ergreifen muss.

Das erfindungsgemäße Verfahren zur Visualisierung von sicherheitsrelevanten grafischen und textuellen Daten in einer nicht sicherheitsrelevanten Hardware- und Softwareumgebung im Eisenbahnwesen wird nun anhand einer Beispielanwendung näher erläutert, bei der der Bremszustand von Güterwaggons als sicherheitsrelevante grafische und textuelle Information dargestellt werden soll.

Der Bremszustand eines Güterwaggons wird zunächst von der sicherheitsrelevanten Software 6, die auf dem sicherheitsrelevanten Rechner 5 läuft, ermittelt. Der sicherheitsrelevante Rechner 5 ist auf dem Güterwaggon montiert. Die ermittelten Bremszustände sind die zu übertragenden und zu visualisierenden Daten. In dieser funktional sicheren Umgebung erstellt die sicherheitsrelevante Software 6 ein Datentelegramm 7, das die ermittelten Bremszustände in unterschiedlichen ersten und zweiten Kodierungen 8, 9 enthält. Das Datentelegramm 7 wird über einen nicht sicheren Kommunikationskanal 4 an einen kommerziell verfügbaren und somit nicht sicherheitsrelevanten Rechner 1, z.B. ein tragbares Gerät, vorzugsweise ein Computer-Tablet, übermittelt. Auf diesem nicht sicherheitsrelevanten Rechner 1 läuft ein Standard-Betriebssystem 3 (z. B. Android), welches als Laufzeitumgebung einer Software-Applikation 2, die als anwendungsspezifische Bremsprobenapplikation 2 zur Visualisierung des Bremszustandes ausgebildet ist, dient. Innerhalb dieser Software-Applikation 2 wird das erhaltene Sicherheits-Telegramm 7 auf folgende Art und Weise entpackt und dargestellt:

Die das Datentelegramm 7 absichernden Maßnahmen werden von dem funktional abgesicherten Telegrammparser 10 überprüft. Falls diese Überprüfung erfolgreich ist, werden die im Datentelegramm 7 redundant vorhandenen und in separaten Kodierungen 8, 9 abgesicherten Bremszustandsdaten ohne Änderung oder Interpretation zur Darstellung freigegeben (Entscheidungsknoten 11,12). Beide Kodierungen 8, 9 der Bremszustandsdatensätze enthalten dieselbe logische Information in einer redundanten und invertierten Datenrepräsentation. Dies bedeutet, dass jedes einzelne Byte der sicherheitsrelevanten Daten auch in seiner invertierten Form übertragen wird. Somit können die im Datentelegramm 7 kodierten Bremszustände durch zwei unabhängige Algorithmen 13, 14 bzw. zwei unabhängige Kanäle in Visualisierungsinformation umgewandelt werden.

Das geschilderte Verfahren wird für mehrere Güterwaggons gleichzeitig angewendet, so dass die Visualisierung der Bremsstatusinformationen von mehreren Güterwaggons auf demselben Bildschirm 20 dargestellt werden.

Vorzugsweise weisen die Repräsentationen der Daten in der ersten Kodierung 8 und der zweiten Kodierung 9 eine Hamming Distanz von zumindest vier auf.

Jeder Algorithmus 13, 14 erzeugt (selektiert von vordefinierten visuellen Elementen, Texten und Farben) eine Teildarstellung eines Bremszustandsbildes als Visualisierungsinformation 15, 16. Im Anschluss werden diese Teildarstellungen (erste und zweite Visualisierungsinformation 15, 16) auf dem Bildschirm 20 zu einem Gesamtbild (kombinierte Visualisierungsinformation 17) überlagert. Das Gesamtbild wird durch den Bremsprobenverantwortlichen (Anwender) in Bezug auf die möglichen vordefinierten Erwartungshaltungen (Form, Größe, Farbe, Position der Bremsbilder) geprüft. Stimmt das Gesamtbild mit keiner der möglichen Erwartungshaltungen überein, so weiß der Bremsprobenverantwortliche, dass ein Fehler aufgetreten ist und leitet entsprechende Maßnahmen ein. Beispielsweise kann er das dargestellte Ergebnis verwerfen.

Somit wird jeglicher Fehler in der nicht sicherheitsrelevanten Hardware- und Software-Umgebung (Rechner 1 und Standard-Betriebssystem 3) auf hoher Ebene durch die Visualisierung offenbart. Zu den offenbarten Fehlern zählen z.B. ein Bearbeitungsfehler in der Arithmetikeinheit, dem Speicher, dem Bussystem des Rechners 1 usw., oder der Software-Applikation 2 bzw. der nicht sicherheitsrelevanten Softwareumgebung 3. Alle diese Fehlerarten verfälschen entweder die originalen Bremszustandsdaten, deren Kodierung 8, 9, oder die erste oder zweite Visualisierungsinformation 15, 16 und daraus resultierend (direkt oder indirekt) die kombinierte Visualisierungsinformation 17.

Zusätzlich wird die Visualisierung durch folgende Maßnahmen abgesichert:

- Die von der sicherheitsrelevanten Software 6 bereitgestellten kodierten Datenblöcke 8, 9 inklusive der jeweiligen Prüfsummen werden in der nicht sicherheitsrelevanten Software-Applikation 2 immer als gesamten Datenblöcke geführt (die einzelne Bremsstatusinformationen werden nicht separat gespeichert). Auf die Datenblöcke wird nur lesend zugegriffen, und bei jedem Lesezugriff wird die Prüfsumme des jeweiligen Datenblocks überprüft, wobei auch die Datenquelle identifiziert wird.
- Die Umwandlung der kodierten Information erfolgt jeweils in separaten Berechnungswegen, wobei die unterschiedlichen Kodierungen nicht vermischt werden.
- Die Hamming Distanz der Kodierung spielt eine wesentliche Rolle in der Absicherung gegen Datenbitfehler bei der Umwandlung in Visualisierungsinformation durch Look-up Tabellen.
- Die nicht sicherheitsrelevante Ablaufumgebung (Rechner 1 mit Betriebssystem 3) stellt durch die Kombination von eigener und einer externen unabhängigen Zeitquelle sicher, dass die visualisierten Daten nur in einem gültigen Zeitraum dargestellt werden, dass die Zeitdauer zwischen einer Aufforderung (REQ) der Software-Applikation 2 an den sicherheitsrelevanten Rechner 5 zur Übermittlung eines Datentelegramms 7 und dem Erhalt des angeforderten Datentelegramms 7 in einem gültigen Zeitbereich liegt, und die interne Zeitquelle des nicht sicherheitsrelevanten Rechners 1 überwacht wird.
- Die Software-Applikation 2 erzeugt und aktualisiert ein dynamisches Symbol 21 (z.B. ein Drehrad) am Bildschirmrand zur visuellen Überwachung der regelmäßigen Aktualisierung des Inhalts des Bildschirms 20 durch den Anwender. Bewegt sich das dynamische Symbol länger als erlaubt nicht, so erkennt der Anwender daraus, dass der Bildschirm 20 "eingefroren" ist und der dargestellte Bremszustand veraltet sein kann.

Somit können sicherheitsrelevante Daten, wie hier die Bremszustände eines Güterwaggons, die von einer funktionalen sicheren Ablaufumgebung (Rechner 5 und darauf laufende Software 6) in geeigneter Art und Weise ermittelt und aufbereitet worden sind, in einer nicht sicherheitsrelevanten Ablaufumgebung (Rechner 1 mit Betriebssystem 3) - nach Übertragung über einen nicht sicherheitsrelevanten Kommunikationskanal 4 - in Visualisierungsinformation 15, 16, 17 umgewandelt werden, die im Fehlerfall zu fehlerhaften Darstellungen führen, so dass die Sicherheitsintegrität der originalen kodierten Daten bis zur vollständigen Visualisierung gewährleistet ist.

Für das erfindungsgemäße Verfahren in der funktional nicht sicheren Umgebung ist eine in Fig. 2 dargestellte Datenstruktur bzw. Telegrammstruktur vorgesehen, die nachfolgend detailliert erläutert wird.

Wie oben erläutert umfasst das Verpacken der sicherheitsrelevanten Daten in das Datentelegramm 7 das Umwandeln der Daten in eine erste Kodierung 8 und eine zweite Kodierung 9 und das Einbetten beider Kodierungen 8, 9 in das Datentelegramm 7. Zusätzlich umfasst das Erstellen des Datentelegramms 7 gemäß der bevorzugten Telegrammstruktur das Ermitteln einer ersten Prüfsumme CRC1 der ersten Kodierung 8, das Ermitteln einer zweiten Prüfsumme CRC2 der zweiten Kodierung 9 und das Einbetten der ersten und der zweiten Prüfsumme CRC1, CRC2 in das Datentelegramm 7. Somit kann der Telegrammparser 10 die Integrität der empfangenen Daten überprüfen, indem er die erste Kodierung 8 anhand der ersten Prüfsumme CRC1 und die zweite Kodierung 9 anhand der zweiten Prüfsumme CRC2 überprüft. Weiters ist in der Telegrammstruktur ein von der sicherheitsrelevanten Software 6 erstellter Header 22 vorgesehen, der zumindest aus der eindeutigen Adresse des sicherheitsrelevanten Rechners 5, einer Protokollversion, eines Kommandos, und aus Nonce-Daten zur Authentifizierung der Kommunikation zwischen dem nicht sicherheitsrelevanten Rechner 1 und dem sicherheitsrelevanten Rechner 5 besteht.

Vorzugsweise wird für den Header 22 eine dritte Prüfsumme CRC3 erzeugt, die bei der Überprüfung des empfangenen Datentelegramms 7 durch den Telegrammparser 10 verwendet wird. Schließlich wird für den gesamten Inhalt des Datentelegramms 7 eine vierte Prüfsumme CRC4 erzeugt und im Datentelegramm 7 eingebettet, die bei der Überprüfung des empfangenen Datentelegramms 7 durch den Telegrammparser 10 verwendet wird.

Alle genannten Prüfsummen können durch zyklische Redundanzprüfung (englisch: Cyclic Redundancy Check (CRC)) mit definierten Generator-Polynom, Startwert und Byte-Reihenfolge bestimmt werden.

In die Prüfsumme der kodierten Daten CRC1, CRC2 werden vorzugsweise die eindeutige Adresse des sicherheitsrelevanten Rechners 5 auch einkalkuliert, damit die Überprüfung der Datenintegrität von kodierten Daten auch die Überprüfung der korrekten Zuordnung der Daten zu einem Waggon während der Verarbeitung der Daten am nicht sicherheitsrelevanten Rechner 1 mitabsichert.

Anhand der Fig. 2 wird nun ein Ausführungsbeispiel der Umwandlung der Kodierungen 8, 9 der sicherheitsrelevanten Daten und ihre Visualisierung bis zur Darstellung der kombinierten Visualisierungsinformation17 am Bildschirm 20 erläutert. Dabei wird zwischen der Darstellung eines grafischen Symbols (Beispiel: Bremsbild) und der Darstellung eines Textes (Beispiele: Waggonnummer oder G/P-Steller, das ist eine Umstellvorrichtung, um an einem Eisenbahnfahrzeug unterschiedliche Bremsarten und des Bremsverhaltens der Bremsen einzustellen) unterschieden.

Zunächst wird auf die Darstellung des grafischen Symbols anhand der kodierten Information eingegangen. Das darzustellende grafische Symbol besteht aus zwei Teilsymbolen. Mit Hilfe einer vordefinierten Umsetzungstabelle (Look-up Table) selektiert jeder Algorithmus 13, 14 (Kanal) anhand der Kodierungen 8, 9 der Bremsstatusinformation eines der beiden Teilsymbole inklusive dessen relative Bildschirmposition und visualisiert es dementsprechend am Bildschirm 20. Des Weiteren beinhaltet diese Umsetzungstabelle zwei Farbwerte, jeweils eine für den Hintergrund jedes Teilsymbols. Diese Farbwerte werden von jedem Algorithmus 13, 14 jeweils zum Hintergrund der Teilsymbole addiert. (D.h. jeder Algorithmus 13, 14 fügt eine Hintergrundfarbe auch zu dem Teilsymbol des anderen Kanals hinzu.) Das selektierte Teilsymbol und das Hintergrundfarbenpaar machen zusammen die Visualisierungsinformation 15, 16 des jeweiligen Kanals aus.

Anhand folgender Formel finden die oben genannten Additionen (jeweils) zu den Farbwerten der Hintergründe der Teilsymbole - farbkanalweise - statt:

$$\textit{Farbkanalwert\_neu = (Farbkanalwert \_alt + zu addierender Wert) modulo 255}$$

Nach der Kombination der Teildarstellungen gemäß den Visualisierungsinformationen 15, 16 beider Kanäle an derselben Bildschirmposition ergibt sich - in einem fehlerfreien Fall - das korrekte Gesamtbild anhand der kombinierten Visualisierungsinformation 17. Ein aufgetretener Fehler ist an dem Gesamtbild eindeutig zu erkennen.

Nun wird auf die Darstellung eines Textes anhand der kodierten Information eingegangen. Der darzustellende Text besteht aus zwei visuellen Feldern, die übereinander liegen. Jeweils einer der beiden Algorithmen 13, 14 (Kanäle) schreibt den Text in eines der beiden Felder. Als Hintergrundfarbe wird von beiden Kanälen eine deutlich erkennbare (und identische) Farbe gewählt. Um einen Text korrekt darzustellen ist es notwendig, dass der Hintergrund durch die Kombination beider Kanäle durchsichtig wird (= 100% Transparenz). Eine deutlich erkennbare Farbe ist nötig, um im Fehlerfall (der Hintergrund wird nicht durchsichtig) den Fehler eindeutig darstellbar zu machen.

Um den Transparenzwert der beiden Felder für die beiden Kanäle zu bestimmen, wird zwischen zwei Varianten unterschieden:

- Im Falle einer Zahl (Beispiel: Waggonnummer), welche mehr als drei Stellen haben muss, wird folgender Algorithmus angewandt:

  ◦ Der erste Kanal zieht die dritt- und viertletzte Ziffer der Zahl, erhöht um 50, heran und addiert diesen Wert zum Transparenzwert des Hintergrundes des ersten visuellen Feldes.
  ◦ Der erste Kanal zieht die vorletzte und letzte Ziffer der Zahl, erhöht um 50, heran und addiert diesen Wert zum Transparenzwert des Hintergrundes des zweiten visuellen Feldes.
  ◦ Der zweite Kanal zieht dieselben Ziffern heran, erhöht diese aber nicht um 50, sondern invertiert diese und verkleinert diese um 50 und addiert die so erhaltenen Werte zu den Transparenzwerten der Hintergründe der beiden visuellen Felder.

- Im Falle eines Textes (Beispiel: G/P-Steller) oder einer Zahl mit drei oder weniger Ziffern werden anhand einer vordefinierten Umsetzungstabelle die zu setzenden Transparenzwerte ermittelt. Der erste Kanal zieht hierzu die in der Umsetzungstabelle vorhandenen Transparenzwerte heran und addiert diese zur Hintergrundtransparenz des jeweiligen Feldes. Der zweite Kanal invertiert die so ermittelten Werte und addiert diese zur Transparenz der Hintergründe der beiden Felder.

Anhand folgender Formel finden die oben genannten Additionen (jeweils) zu den Transparenzwerten der Hintergründe der Felder statt:

$$Transparenz\_neu = (Transparenz\_alt + zu\ addierender\ Wert)\ modulo\ 255$$

Ist der so ermittelte neue Transparenzwert kleiner als 49, so wird dieser auf 49 gesetzt. Dies dient dazu, den so ermittelten Fehler eindeutig darzustellen.

In einem fehlerfreien Fall ergibt dieses Verfahren den korrekten Text auf dem Bildschirm 20, der für den betrachtenden Anwender nur einfach vorhanden zu sein scheint (d.h. die Überlagerung der identischen Texte ist vollständig), und der Hintergrund des Textes ist transparent (es sind keine Farbunterschiede zum umgebenden Hintergrund vorhanden). Im Falle eines Fehlers ist dies an der Darstellung am Bildschirm 20 eindeutig zu erkennen (z.B. zwei unterschiedliche Texte sind übereinandergeschrieben oder der Hintergrund des Textes weicht farblich von der Umgebung ab).

Es ist darauf hinzuweisen, dass es sich bei den oben beschriebenen Ausführungsformen zur Darstellung von grafischen Symbolen und Texten um Beispiele handelt, auf die die Erfindung aber nicht beschränkt ist.

**Patentansprüche**

1.  Verfahren zur Visualisierung von grafischen und textuellen Informationen in einer nicht sicherheitsrelevanten Hardware- und Softwareumgebung im Eisenbahnwesen, wobei die Visualisierung der grafischen und textuellen Informationen ihre Darstellung an einem Bildschirm als visuelle Elemente, die durch zumindest eines aus ihrer Form, ihrer Größe, ihrer Farbgestaltung, ihrer horizontalen und vertikalen Position am Bildschirm, definiert sind, umfasst, **dadurch gekennzeichnet, dass** die visuellen Elemente durch Kombinieren von zumindest zwei Bestandteilen der visuellen Elemente am Bildschirm dargestellt werden, wobei durch das Kombinieren ein möglicher Fehler in der nicht sicherheitsrelevanten Hardware- und Software-Umgebung als Darstellungsfehler von zumindest einem der visuellen Elemente am Bildschirm offenbart wird.

2.  Verfahren nach Anspruch 1, **dadurch gekennzeichnet, dass** die nicht sicherheitsrelevante Hardware- und Softwareumgebung einen nicht sicherheitsrelevanten Rechner (1) mit zumindest einer darauf laufenden Softwareapplikation (2) enthält, die folgende Verfahrensschritte ausführt:

    das Durchführen einer Sicherheitsintegritätsprüfung von sicherheitsrelevanten Daten, die von zumindest einem sicherheitsrelevanten Rechner (5) bereitgestellt werden und die grafischen und textuellen Informationen in zumindest zwei unterschiedlichen Kodierungen (8, 9) redundant enthalten,
    das Umwandeln der grafischen und textuellen Informationen aus der ersten Kodierung (8) in erste Visualisierungsinformation (15),
    das Umwandeln der grafischen und textuellen Informationen aus der zweiten Kodierung (9) in zweite Visualisierungsinformation (16),
    gegebenenfalls das Umwandeln der grafischen und textuellen Informationen aus den weiteren Kodierungen in weitere Visualisierungsinformationen,
    das Kombinieren der ersten, der zweiten und gegebenenfalls der weiteren Visualisierungsinformationen (15, 16) zu einer kombinierten Visualisierungsinformation (17) und das Darstellen der kombinierten Visualisierungsinformation (17) am Bildschirm, wobei nur fehlerfrei erfolgtes Umwandeln der grafischen und textuellen Informationen aus den jeweiligen Kodierungen (8, 9) in die Visualisierungsinformationen (15, 16) und fehlerfreies Kombinieren der Visualisierungsinformationen (15, 16) zur kombinierten Visualisierungsinformation (17) eine Darstellung ergibt, die von einem Anwender als korrekt erkennbar ist, und andernfalls die kombinierte Visualisierungsinformation (17) eine Darstellung ergibt, aus der der Anwender erkennt, dass ein Fehler aufgetreten ist.

3.  Verfahren nach Anspruch 2, **dadurch gekennzeichnet, dass** die sicherheitsrelevanten Daten von zumindest zwei unterschiedlichen sicherheitsrelevanten Rechnern (5) bereitgestellt werden, wobei die nicht sicherheitsrelevante Softwareapplikation (2) die Verfahrensschritte für alle bereitgestellten sicherheitsrelevanten Daten so ausführt, dass alle grafischen und textuellen Informationen auf demselben Bildschirm (20) dargestellt werden.

4.  Verfahren nach Anspruch 2 oder 3, **dadurch gekennzeichnet, dass** die sicherheitsrelevanten Daten von dem zumindest einen sicherheitsrelevanten Rechner (5) für ihre Bereitstellung in ein Datentelegramm (7) verpackt werden, in dem die erste Kodierung (8), die zweite Kodierung (9) und gegebenenfalls die weiteren Kodierungen der grafischen und textuellen Informationen eingebettet werden und das Datentelegramm (7), vorzugsweise über einen nicht sicherheitsrelevanten Kommunikationskanal (4), an den nicht sicherheitsrelevanten Rechner (1) übertragen wird.

5. Verfahren nach einem der Ansprüche 2 bis 4, **dadurch gekennzeichnet, dass** die zweite Kodierung (9) eine zur ersten Kodierung (8) invertierte Repräsentation der grafischen und textuellen Informationen enthält.

6. Verfahren nach einem der Ansprüche 2 bis 5, **dadurch gekennzeichnet, dass** die Repräsentationen der grafischen und textuellen Informationen in der ersten Kodierung (8) und der zweiten Kodierung (9) oder gegebenenfalls in den weiteren Kodierungen eine Hamming Distanz von zumindest vier aufweisen.

7. Verfahren nach einem der Ansprüche 4 bis 6, **dadurch gekennzeichnet, dass** das Verpacken der sicherheitsrelevanten Daten in das Datentelegramm (7) das Ermitteln einer ersten Prüfsumme (CRC1) der ersten Kodierung (8), das Ermitteln einer zweiten Prüfsumme (CRC2) der zweiten Kodierung (9), gegebenenfalls das Ermitteln von weiteren Prüfsummen der weiteren Kodierungen und das Einbetten der ersten und der zweiten und gegebenenfalls der weiteren Prüfsummen (CRC1, CRC2) in das Datentelegramm (7) umfasst, und das Überprüfen auf Sicherheitsintegrität des von dem nicht sicherheitsrelevanten Rechner (1) empfangenen Datentelegramms (7) das Überprüfen der ersten Kodierung (8) anhand der ersten Prüfsumme (CRC1) und das Überprüfen der zweiten Kodierung (9) anhand der zweiten Prüfsumme (CRC2) und gegebenenfalls das Überprüfen der weiteren Kodierungen anhand der weiteren Prüfsummen umfasst.

8. Verfahren nach Anspruch 7, **dadurch gekennzeichnet, dass** eine Identifikation des sicherheitsrelevanten Rechners (5) in den Prüfsummen der Kodierungen (CRC1, CRC2) abgebildet wird.

9. Verfahren nach einem der Ansprüche 7 oder 8, **dadurch gekennzeichnet, dass** die Softwareapplikation (2) das empfangene Datentelegramms (7) auf Sicherheitsintegrität überprüft, und falls das Datentelegramm (7) korrekt ist, das Datentelegramm (7) zur weiteren Verwendung freigibt, umfassend

das Auslesen der Daten der ersten Kodierung (8) des freigegebenen Datentelegramms (7) inklusive der dazugehörigen ersten Prüfsumme (CRC1),
das Umwandeln der ausgelesenen Daten der ersten Kodierung (8) in die erste Visualisierungsinformation (15) in einem ersten Bearbeitungskanal (13) anhand von Umsetzungstabellen, wobei auf die erste Kodierung (8) immer nur lesend zugegriffen wird und bei jedem Lesezugriff die Sicherheitsintegrität der ersten Kodierung (8) anhand der ersten Prüfsumme (CRC1) überprüft wird,
wobei die das Ergebnis der ersten Visualisierungsinformation (15) für einen Anwender entweder nicht sichtbar oder als fehlerhafte Darstellung erkennbar ist,
das Auslesen der Daten der zweiten Kodierung (9) des freigegebenen Datentelegramms (7) inklusive der dazugehörigen zweiten Prüfsumme (CRC2),
das Umwandeln der ausgelesenen Daten der zweiten Kodierung (9) in die zweite Visualisierungsinformation (16) in einem zweiten Bearbeitungskanal (14) anhand von Umsetzungstabellen, wobei auf die zweite Kodierung (9) immer nur lesend zugegriffen wird und bei jedem Lesezugriff die Sicherheitsintegrität der zweiten Kodierung (9) anhand der zweiten Prüfsumme (CRC2) überprüft wird,
wobei das Ergebnis der zweiten Visualisierungsinformation (16) für einen Anwender entweder nicht sichtbar oder als fehlerhafte Darstellung erkennbar ist,
gegebenenfalls das Auslesen der Daten weiterer Kodierungen des freigegebenen Datentelegramms (7) inklusive der dazugehörigen Prüfsummen und Umwandeln der ausgelesenen Daten der weiteren Kodierungen in weitere Visualisierungsinformationen in weiteren Bearbeitungskanälen anhand von Umsetzungstabellen, wobei auf die weiteren Kodierungen immer nur lesend zugegriffen wird und bei jedem Lesezugriff die Sicherheitsintegrität der weiteren Kodierungen anhand der zugehörigen Prüfsumme überprüft wird, wobei das Ergebnis der weiteren Visualisierungsinformationen für einen Anwender entweder nicht sichtbar ist oder als fehlerhafte Darstellung erkennbar ist,
das Kombinieren der ersten Visualisierungsinformation (15) und der zweiten Visualisierungsinformation (16) und gegebenenfalls der weiteren Visualisierungsinformationen zu einer kombinierten Visualisierungsinformation (17), wobei
die kombinierte Visualisierungsinformation (17), falls bei den durchgeführten Verfahrensschritten kein Fehler aufgetreten ist, solcherart am Bildschirm dargestellt wird, dass der Anwender aus der Darstellung die Korrektheit der Visualisierung der Daten erkennt.

**10.** Verfahren nach einem der Ansprüche 2 bis 9 zur Visualisierung von grafischen Informationen, **dadurch gekennzeichnet, dass** das Umwandeln der ausgelesenen ersten Kodierung (8) in erste Visualisierungsinformation (15) das Erstellen eines ersten Teilbilds umfasst, und das Umwandeln der ausgelesenen zweiten Kodierung (9) in zweite Visualisierungsinformation (16) das Erstellen eines zweiten Teilbilds umfasst, und gegebenenfalls das Umwandeln der ausgelesenen weiteren Kodierungen in weitere Visualisierungsinformationen das Erstellen weiterer Teilbilder umfasst, wobei das Kombinieren der ersten Visualisierungsinformation (15) und der zweiten Visualisierungsinformation (16) und gegebenenfalls der weiteren Visualisierungsinformationen zu einer kombinierten Visualisierungsinformation (17) das Überlagern des ersten Teilbilds und des zweiten Teilbilds und gegebenenfalls der weiteren Teilbilder am Bildschirm umfasst.

**11.** Verfahren nach Anspruch 10, **dadurch gekennzeichnet, dass** das Erstellen der Teilbilder das Aufsuchen eines Werteeintrags in einer Umsetzungstabelle (24) anhand der ausgelesenen Daten in der zugehörigen Kodierung umfasst, wobei jeder Werteeintrag der Umsetzungstabelle (24) ein grafisches Teilsymbol, die relative Bildschirmposition des Teilbilds und so viele Farbwerte für die Kombination der Hintergrundfarben aller Teilsymbole umfasst, wie Teilsymbole für die Erstellung der kombinierten Visualisierungsinformation (17) herangezogen werden.

**12.** Verfahren nach einem der Ansprüche 2 bis 9 zur Visualisierung von textuellen Daten, **dadurch gekennzeichnet, dass** das Umwandeln der ausgelesenen ersten Kodierung (8) in erste Visualisierungsinformation (15) das Erstellen eines ersten Felds umfasst, und das Umwandeln der ausgelesenen zweiten Kodierung (9) in zweite Visualisierungsinformation (16) das Erstellen eines zweiten Felds umfasst, und gegebenenfalls das Umwandeln der ausgelesenen weiteren Kodierungen in weitere Visualisierungsinformationen das Erstellen weiterer Felder umfasst, wobei das Kombinieren der ersten Visualisierungsinformation (15) und der zweiten Visualisierungsinformation (16) und gegebenenfalls der weiteren Visualisierungsinformationen zu einer kombinierten Visualisierungsinformation (17) das Überlagern des ersten Felds und des zweiten Felds und gegebenenfalls der weiteren Felder am Bildschirm umfasst.

**13.** Verfahren nach Anspruch 12, **dadurch gekennzeichnet, dass** das Erstellen eines Felds das Aufsuchen eines Werteeintrags in einer Umsetzungstabelle anhand der ausgelesenen Daten in der zugehörigen Kodierung umfasst, wobei jeder Werteeintrag der Umsetzungstabelle einen Text, die relative Bildschirmposition des Felds, eine Hintergrundfarbe und so viele Transparenzwerte für die Kombination mit der Hintergrundfarbe aller erstellten Felder umfasst, wie Felder für die Erstellung der kombinierten Visualisierungsinformation (17) herangezogen werden.

**14.** Verfahren nach einem der Ansprüche 2 bis 13, **dadurch gekennzeichnet, dass** der nicht sicherheitsrelevante Rechner (1) einen Taktgeber aufweist, der, vorzugsweise durch eine externe Zeitquelle, abgesichert wird.

**15.** Verfahren nach einem der Ansprüche 1 bis 14, **dadurch gekennzeichnet, dass** ein sich ständig änderndes Symbol (21), beispielsweise ein Drehrad, etc., am Bildschirm dargestellt wird.

**16.** System zur Visualisierung von sicherheitsrelevanten grafischen und textuellen Informationen in einer nicht sicherheitsrelevanten Hardware- und Softwareumgebung im Eisenbahnwesen, umfassend einen nicht sicherheitsrelevanten Rechner (1) mit zumindest einem Bildschirm (20), einen oder mehrere sicherheitsrelevante Rechner (5) und einen Kommunikationskanal (4) zwischen dem nicht sicherheitsrelevanten Rechner (1) und dem zumindest einen sicherheitsrelevanten Rechner (5), wobei der nicht sicherheitsrelevante Rechner (1) und der sicherheitsrelevante Rechner (5) mit Prozessoren, Programmspeichern und Datenspeichern ausgestattet und dazu ausgebildet sind, das Verfahren nach einem der vorhergehenden Ansprüche abzuarbeiten, wobei vorzugsweise der nicht sicherheitsrelevante Rechner (1) als Tablet-Computer ausgebildet ist.

**17.** System nach Anspruch 16, **dadurch gekennzeichnet, dass** die nicht sicherheitsrelevante Softwareumgebung (3) des nicht sicherheitsrelevanten Rechners (1) ein Betriebssystem des Rechners (1) und Softwarebibliotheken umfasst.

Fig. 1

Fig. 2

Europäisches
Patentamt

European
Patent Office

Office européen
des brevets

**EUROPÄISCHER RECHERCHENBERICHT**

**Nummer der Anmeldung**

**EP 23 15 5539**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 746 877 B1 (KONCAR KET D O O [HR]; KONCAR INST ZA ELEKTROTEHNIKU D O O [HR]) 9. November 2022 (2022-11-09) * Absätze [0009] - [0026]; Abbildungen 1-8 * ----- | 1-17 | INV. G06F3/147 |
| X | US 5 805 134 A (SEKI HIROYUKI [JP] ET AL) 8. September 1998 (1998-09-08) * Spalte 4, Zeile 1 - Spalte 9, Zeile 10; Abbildungen 2-5,7 * ----- | 1,2, 4-14,16, 17 | |
| A | US 2005/010762 A1 (SCHMIDT JOACHIM [DE]) 13. Januar 2005 (2005-01-13) * Absätze [0004], [0005], [0042]; Abbildung 3 * ----- | 1-17 | |

| RECHERCHIERTE SACHGEBIETE (IPC) |
|---|
| G06F G09G |

Der vorliegende Recherchenbericht wurde für alle Patentansprüche erstellt

| Recherchenort | Abschlußdatum der Recherche | Prüfer |
|---|---|---|
| München | 4. Juli 2023 | Demin, Stefan |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus anderen Gründen angeführtes Dokument
...............................................................................
& : Mitglied der gleichen Patentfamilie, übereinstimmendes
  Dokument

EPO FORM 1503 03.82 (P04C03)

14

**ANHANG ZUM EUROPÄISCHEN RECHERCHENBERICHT
ÜBER DIE EUROPÄISCHE PATENTANMELDUNG NR.**

EP 23 15 5539

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-07-2023

| Im Recherchenbericht angeführtes Patentdokument | Datum der Veröffentlichung | Mitglied(er) der Patentfamilie | | Datum der Veröffentlichung |
|---|---|---|---|---|
| EP 3746877 B1 | 09-11-2022 | EP | 3746877 A1 | 09-12-2020 |
| | | WO | 2019149348 A1 | 08-08-2019 |
| US 5805134 A | 08-09-1998 | EP | 0575942 A2 | 29-12-1993 |
| | | US | 5805134 A | 08-09-1998 |
| US 2005010762 A1 | 13-01-2005 | AT | 548814 T | 15-03-2012 |
| | | CN | 1571406 A | 26-01-2005 |
| | | DE | 10318068 A1 | 18-11-2004 |
| | | EP | 1469625 A1 | 20-10-2004 |
| | | ES | 2379259 T3 | 24-04-2012 |
| | | JP | 2004320779 A | 11-11-2004 |
| | | JP | 2009182981 A | 13-08-2009 |
| | | US | 2005010762 A1 | 13-01-2005 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3040862 A